Europäisches Patentamt

European Patent Office

Office européen des brevets

(19)

(11) EP 0 708 969 B1

# (12) FASCICULE DE BREVET EUROPEEN

(45) Date de publication et mention
de la délivrance du brevet:
**24.09.1997 Bulletin 1997/39**

(21) Numéro de dépôt: **94922911.6**

(22) Date de dépôt: **12.07.1994**

(51) Int Cl.[6]: **G21F 9/34**, C01B 25/16,
C01B 33/20

(86) Numéro de dépôt international:
**PCT/FR94/00873**

(87) Numéro de publication internationale:
**WO 95/02886 (26.01.1995 Gazette 1995/05)**

(54) **PROCEDE DE CONDITIONNEMENT DE DECHETS RADIOACTIFS UTILISANT DES APATITES PHOSPHOSILICATEES COMME MATRICE DE CONFINEMENT**

VERFAHREN ZUM ENDKONDITIONIEREN RADIOAKTIVER ABFÄLLE UNTER VERWENDUNG VON PHOSPHOSILIKATSAPATITEN ALS SICHERHEITSMATRIX

METHOD FOR ENCAPSULATING RADIOACTIVE WASTE USING PHOSPHOSILICATED APATITES AS THE CONFINING MATRIX

(84) Etats contractants désignés:
**BE CH DE ES GB LI SE**

(30) Priorité: **15.07.1993 FR 9308676**

(43) Date de publication de la demande:
**01.05.1996 Bulletin 1996/18**

(73) Titulaire: **COMMISSARIAT A L'ENERGIE ATOMIQUE**
**75015 Paris (FR)**

(72) Inventeurs:
• **CARPENA, Joelle**
**F-13490 Jouques (FR)**
• **LACOUT, Jean-Louis**
**F-32240 Toulouse (FR)**

(74) Mandataire: **Des Termes, Monique**
**Société Brevatome**
**25, rue de Ponthieu**
**75008 Paris (FR)**

(56) Documents cités:
• JOURNAL OF THE AMERICAN CERAMIC SOCIETY, vol. 65, no.11, Novembre 1982 pages 544-548, WEBER W. J. 'Radiation damage in a rare-earth silicate with the apatite structure.'
• JOURNAL OF THE AMERICAN CERAMIC SOCIETY, vol. 73, no.7, Juillet 1990 pages 1901-1906, HARKER ALAN B. & AL. 'Polyphase ceramic for consolidating nuclear waste compositions with high Zr-Cd-Na content'
• REVUE DE CHIMIE MINERALE, vol. 20, no.4-5, 1983 pages 441-448, DE ALLELIUA I. B. & AL. 'Silicates of tervalent transuranium elements'
• INORGANIC MATERIALS, vol. 9, no.4, Avril 1973 pages 652-654, FEDOROV N. F. & AL. 'Synthesis and investigation of silicate-fluoroapatites with the composition M4Ln6(SiO4)6F2, where M is Ca or Sr, Ln is Nd, Y, or Yb'
• 25TH ANNUAL MEETING OF THE AMERICAN NUCLEAR SOCIETY, ATLANTA, USA, 3-7 JUNE 1979, pages 168-169, KRAJEWSKI T. & AL. 'Mineral-contributed anion effects on the retention of trivalent actinides in the environment'
• POLYHEDRON, vol. 1, no.4, 1982 pages 343-348, GIVAN A. & AL. 'Syntheses and characterization of uranium containing apatites'

## Description

La présente invention concerne le conditionnement de déchets radioactifs, en particulier de déchets radioactifs à vie longue comme les actinides.

Dans les installations de retraitement de combustibles nucléaires irradiés, il reste en fin de traitement quelques éléments actinides à vie longue et certains lanthanides qui doivent être conditionnés en vue d'un stockage à long terme dans des matrices très résistantes.

Les matériaux utilisables comme matrice doivent présenter des caractéristiques de stabilité chimique, de stabilité aux rayonnements et de stabilité à la température très élevées, pour isoler les éléments radioactifs de l'environnement et les maintenir dans cet état isolé pendant des durées très longues, en raison de leur période radioactive.

Actuellement, la matrice retenue pour ce conditionnement est le verre mais on recherche toujours de nouveaux matériaux présentant des caractéristiques encore meilleures pour ce conditionnement.

La présente invention a précisément pour objet un procédé de conditionnement de déchets radioactifs utilisant comme matrice de confinement, un matériau présentant des propriétés particulièrement adaptées à un stockage à long terme.

Selon l'invention, le procédé de conditionnement de déchets radioactifs consiste à incorporer ces déchets dans une matrice de confinement à base d'apatite phosphosilicatée.

L'emploi d'apatite phosphosilicatée est très intéressant car les apatites possèdent les propriétés remarquables suivantes :

- Ces structures sont très stables chimiquement et thermiquement dans le milieu naturel. Il existe d'ailleurs des apatites silicatées naturelles contenant des actinides depuis des centaines de millions d'années.
- Les apatites ont une solubilité très faible dans l'eau ; de plus, leur solubilité diminue lorsque la température augmente, ce qui est un point positif pour le conditionnement des actinides car leur haute activité va impliquer une augmentation de la température dans la matrice qui les contiendra.
- Les structures apatitiques sont capables de résister à la radioactivité car les dégâts d'irradiation qu'elles subissent sont instables à une température supérieure à 60°C. L'apatite possède en effet la propriété de se restructurer à des températures supérieures à 60°C.
- Les structures apatitiques ont la propriété très intéressante de pouvoir intégrer dans leur structure de nombreux éléments métalliques, en particulier les actinides et les lanthanides.

En effet, on peut représenter les apatites naturelles sous la formule générale suivante :

$$Ca_{10}(PO_4)_6F_2$$

qui correspond à la structure de la fluoroapatite. Mais dans cette structure, on peut réaliser de nombreuses substitutions, en particulier remplacer les cations $Ca_2^+$ par divers éléments métalliques tels que les lanthanides, les actinides et les métaux alcalins, substituer les ions $PO_4^{3-}$ par d'autres anions tels que $SiO_4^{4-}$, et substituer également les anions $F^-$ par des anions $S^{2-}$, $Cl^-$, $Br^-$, $I^-$ ou $OH^-$.

Selon l'invention, l'apatite phosphosilicatée utilisée répondant à la formule :

$$M_tCa_xLn_yA_z(PO_4)_u(SiO_4)_{6-u}X$$

dans laquelle

- M est au moins un cation de métal alcalin,
- Ln représente au moins un cation choisi parmi l'yttrium et les lanthanides,
- A représente au moins un cation choisi parmi les actinides,
- X représente $S^{2-}$, $2F^-$, $2Cl^-$, $2OH^-$ $2Br^-$ ou $2I^-$ et
- t, u, x, y et z sont tels que

$$0 \leq t \leq 3$$

$$0 < u < 6$$

$$0 < x < 10$$

$$0 \leq y \leq 10$$

$$0 \leq z \leq 7$$

$$y + z > 0$$

et que le nombre total de charges positives apportées par les cations M, Ca, Ln et A soit égal à (26 - u).

Dans cette formule, le nombre total de charges négatives est apporté par les anions $PO_4^{3-}$, $SiO_4^{4-}$ et $X^{2-}$. Ces charges sont équilibrées par les cations ajoutés parmi lesquels les lanthanides et les actinides peuvent être sous différents états, par exemple les états divalents, trivalents, ou tétravalents dans le cas des lanthanides et les états tri ou tétravalents dans le cas des actinides.

Pour que l'équilibre des charges soit respecté, les quantités t, x, y et z sont choisies en fonction de la quantité u d'anion $PO_4^{3-}$ et de l'état de valence des lanthanides et/ou des actinides présents pour obtenir la neutralité. De ce fait, ces quantités peuvent être ou non des nombres entiers.

Les métaux alcalins utilisés dans cette apatite peuvent être par exemple $Na^+$, $K^+$, $Cs^+$ ; les lanthanides peuvent être n'importe quel lanthanide et les actinides peuvent être par exemple Np, Pu, Am, Cm etc.

Dans les apatites phosphosilicatées utilisées dans l'invention, le choix du rapport $PO_4/SiO_4$ constitue un paramètre important car il permet d'obtenir un bon compromis entre la résistance aux dégâts d'irradiation et la résistance à la lixiviation.

A titre d'exemple d'apatite phosphosilicatée utilisable dans l'invention, on peut citer les fluorapatites répondant à la formule :

$$Ca_{10-y}\, Ln_y(PO_4)_{6-y}\, (SiO_4)_y\, F_2 \qquad\qquad (II)$$

dans laquelle y est tel que :

$$0 < y < 6$$

Selon l'invention, la matrice d'apatite phosphosilicatée peut être formée d'éléments non actifs et être utilisée uniquement comme matrice d'enrobage d'un déchet radioactif, ou elle peut comprendre dans sa structure chimique les éléments actifs du déchet tels que les lanthanides et les actinides.

Dans ce dernier cas, l'apatite phosphosilicatée répondra à la formule :

$$M_t Ca_x Ln_y A_z (PO_4)_u (SiO_4)_{6-u} X$$

dans laquelle au moins une partie de Ln et A sont les lanthanides et les actinides à conditionner, et M, x, y, t et u ont les significations données ci-dessus.

Lorsqu'on incorpore directement les éléments radioactifs dans la structure de l'apatite, on peut de plus disposer autour de cette apatite contenant les lanthanides et/ou les actinides à conditionner, au moins une couche d'apatite phosphosilicatée non active et éventuellement d'autres couches d'apatite silicatée ou non de composition différente de façon à constituer des barrières successives appropriées entre le déchet actif et l'environnement.

De même, on peut disposer une ou plusieurs couches d'apatite silicatée ou non de composition différente autour de déchets entourés d'une première couche d'apatite phosphosilicatée non active.

Dans les deux cas, les couches les plus internes sont de préférence choisies pour résister aux dégâts d'irradiation, et les couches les plus externes peuvent être choisies pour résister aux agressions du milieu extérieur. On peut de plus utiliser pour une ou plusieurs couches la composition de la fluorapatite $Ca_{10}(PO_4)_6 F_2$ qui est particulièrement résistante.

Par ailleurs, on choisit les couches de façon à améliorer les propriétés mécaniques de l'ensemble.

Les apatites phosphosilicatées de formule (I) utilisées dans l'invention peuvent être préparées à partir de poudre des constituants sous la forme d'oxyde, de phosphate, de carbonate, de fluorure, d'halogénure, de sulfure, d'hydroxyde, ou encore de silicate.

Aussi, l'invention a également pour objet un procédé de préparation d'apatites silicatées de formule:

$$M_t \, Ca_x \, Ln_y \, A_z \, (PO_4)_u \, (SiO_4)_{6-u} X \qquad (I)$$

dans laquelle M, Ln, A, t, x, y, z et u ont les significations données ci-dessus, et X représente 2F⁻ qui comprend les étapes suivantes :

a) préparer un mélange de poudres comprenant

- au moins un phosphate choisi parmi le pyrophosphate de calcium, les phosphates de lanthanides et les phosphates d'actinides,
- du fluorure de calcium,
- du carbonate de calcium,
- au moins un composé choisi parmi $SiO_2$, $CaSiO_3$ et $M_2SiO_3$, et
- éventuellement un ou plusieurs oxydes choisis parmi les oxydes de terres rares et les oxydes d'actinides, en proportions telles qu'elles correspondent à l'obtention de l'apatite de formule (I) voulue,

b) traiter thermiquement le mélange pour décomposer le carbonate de calcium et éliminer le gaz carbonique, et
c) calciner le mélange traité thermiquement à une température de 800 à 1500°C, pendant une durée appropriée pour former l'apatite silicatée de formule (I).

Dans la première étape de ce procédé, on prépare le mélange par broyage des poudres entre elles à une granulométrie de préférence inférieure à 50μm.

Le traitement thermique de décomposition du $CaCO_3$ peut être effectué ensuite, sous la pression atmosphérique, à une température de 700 à 1200°C, par exemple d'environ 900°C ± 10°C, pendant une durée d'environ 1 h.

On peut aussi réaliser le traitement thermique sous pression, à des températures plus faibles, par exemple à des températures de 650 à 1000°C, sous des pressions de 600 à 2000 MPa.

Pour la calcination finale, on choisit la durée de calcination en fonction de la température utilisée, cette durée pouvant aller de 2 h pour des températures élevées, par exemple de 1300-1400°C, sous la pression atmosphérique, à environ 20 h pour des températures plus faibles, par exemple de 1100 à 1200°C.

Après calcination, on broie à nouveau de préférence le mélange à une granulométrie inférieure à 50μm et on répète éventuellement une ou plusieurs fois les étapes de calcination et de broyage jusqu'à l'obtention d'un composé apatitique homogène.

On peut aussi réaliser la calcination sous pression, par exemple sous des pressions de 1000 à 3000MPa pendant des durées choisies en fonction de la température utilisée, celle-ci étant généralement plus basse, par exemple 800 à 1100°C que dans le cas des calcinations effectuées à la pression atmosphérique.

D'autres caractéristiques et avantages de l'invention apparaitront mieux à la lecture de la description qui suit donnée bien entendu à titre illustratif et non limitatif en référence au dessin annexé sur lequel :

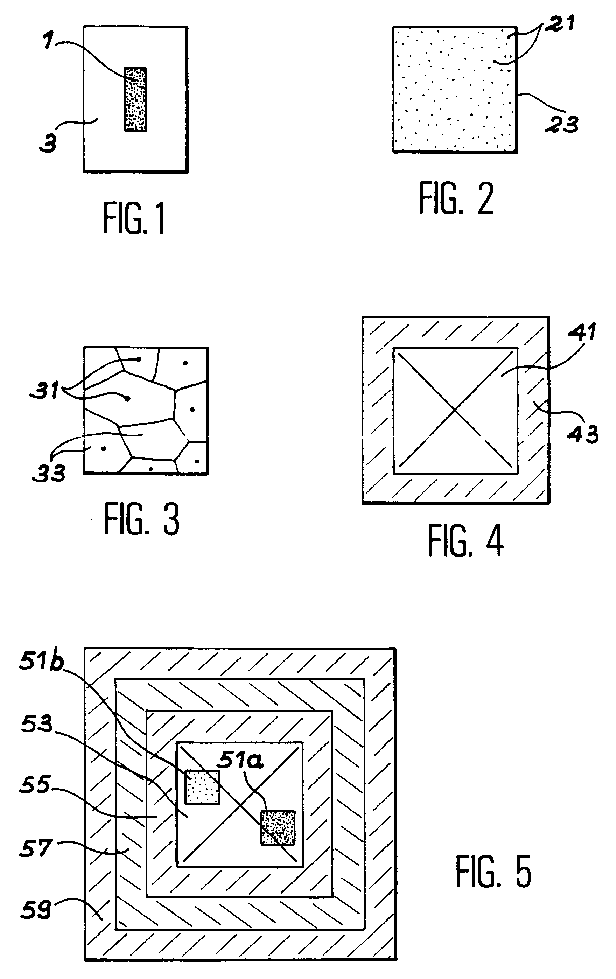

- les figures 1 à 5 illustrent des blocs de conditionnement de déchets radioactifs obtenus conformément à l'invention.

On décrit, ci-après plusieurs exemples de réalisation de matrices à base d'apatite phosphosilicatée conformes à l'invention.

I. Préparation d'apatite phosphosilicatée comprenant des terres rares et des actinides.

Pour cette préparation, on utilise du carbonate de calcium $CaCO_3$, du pyrophosphate de calcium $Ca_2P_2O_7$, de la silice $SiO_2$, du fluorure de calcium $CaF_2$, de l'oxyde de lanthane $Ln_2O_3$ et/ou du phosphate de lanthane $LnPO_4$. et un oxyde et/ou phosphate d'actinide. Cette préparation correspond au schéma réactionnel suivant dans le cas de l'apatite de formule (I) avec X=2F⁻, t=0, z=0, x=10-y et u=6-y, soit l'apatite de formule :

$$Ca_{10-y}Ln_y(PO_4)_{6-y}(SiO_4)_y F_2 \qquad (II)$$

4

$$aCaCO_3 + bLa_2O_3 + cCa_2P_2O_7 + dSiO_2 + eCaF_2 + fLaPO_4 \rightarrow$$

$$Ca_{10-y}Ln_Y(PO_4)_{6-y}(SiO_4)_yF_2 \qquad (II)$$

dans lequel a, b, c, d, e, et f, sont les quantités en mole des différents constituants.

Pour obtenir l'apatite voulue, il faut donc satisfaire les relations suivantes :

$$y = f + 2b$$

$$y = d,$$

et

$$10 - y = a + 2c + e,$$

$$6 - y = f + c/2.$$

A titre d'exemple, on donne dans le tableau 1 qui suit la valeur des coefficients a, b, c, d, e, et f, qui peuvent être choisis en fonction de la valeur de y et du produit à obtenir.

Les produits de départ utilisés pour cette préparation sont des produits du commerce ou des produits naturels. Toutefois, le pyrophosphate $Ca_2P_2O_7$ peut être préparé par calcination simple à l'air, par exemple à une température de 700°C ± 10°C pendant 1h, de phosphate dicalcique dihydraté, $Ca(HPO_4)$, $2H_2O$, qui est disponible en grande quantité dans le commerce.

Lorsqu'on utilise un phosphate de lanthanide, on peut se le procurer dans le commerce. Cependant, comme il coûte assez cher, on peut choisir une solution moins onéreuse dans le cas où y = 2 ou 3, en remplaçant le phosphate du commerce par un phosphate naturel tel que la monazite ou le xénotime. La formule générale des monazites et xénotimes est $LnPO_4$. Pour les monazites, Ln est constitué en majeure partie de cérium et de terre cériques. Pour les xénotimes Ln est constitué d'yttrium et de terres yttriques. De plus, de la silice est souvent associée à ces minerais naturels, ce qui n'est pas gênant puisque la silice est nécessaire pour la réalisation de l'apatite de l'invention. On peut donc à partir de l'analyse chimique du minerai naturel, équilibrer une réaction de façon à obtenir une apatite silicatée à un prix plus raisonnable. En fin de réaction, il reste de la monazite ou de la xénotime n'ayant pas réagi mais cela ne gêne pas car ces composés sont particulièrement stables et peuvent être inclus dans la matrice de confinement.

Les exemples 1 à 4 donnés ci-après illustrent la préparation d'apatites phosphosilicatées au lanthane conforme à l'invention.

**Exemple 1** : Préparation de $Ca_8La_2(PO_4)_4(SiO_4)_2F_2$.

Pour réaliser cette apatite, on utilise des quantités de $CaCO_3$, $La_2O_3$, $Ca_2P_2O_7$, $SiO_2$ et $CaF_2$ données dans le tableau 2. La quantité de $CaF_2$ représente un excès de 10% par rapport à la quantité stoechiométrique pour compenser la volatilisation du $CaF_2$ lors de la calcination, accroître la cinétique de réaction, avoir une réaction totale.

Pour cette préparation, on mélange les produits et on les broie soigneusement à une granulométrie inférieure à 50µm et on les mélange intimement. On porte ensuite le mélange obtenu à 900°C ± 10°C, pendant 1 h, pour décomposer le carbonate de calcium et éliminer ainsi le $CO_2$. On porte ensuite le mélange à une température de 1300°C ± 10°C dans un four à pression atmosphérique. On le calcine à cette température pendant 2h, puis on le broie à une granulométrie inférieure à 50µm, et on le calcine successivement 3 fois selon le même cycle en effectuant un broyage entre chaque calcination.

On obtient ainsi 12,04g d'apatite de formule :

$$Ca_8La_2(PO_4)_4(SiO_4)_2F_2.$$

On obtient le même résultat en réalisant la calcination en une seule étape à une température de 1000 ± 10°C sous une pression de 6000 ±500MPa (60±5kbar) pendant deux heures environ.

**Exemples 2 et 3.**

Dans ces exemples, on suit le même mode opératoire que dans l'exemple 1 pour préparer les produits du tableau 2 en utilisant les quantités de produit de départ mentionnées dans ce tableau. On obtient ainsi des apatites au lanthane.

**Exemple 4.**

Dans cet exemple on prépare la même apatite que dans l'exemple 1, mais en utilisant du phosphate de lanthane au lieu d'oxyde de lanthane, soit les quantités molaires de produits de départ illustrés à la ligne 1 du tableau 1.

Dans ce cas, on suit le même mode opératoire, mais les quantités de produit de départ sont les suivantes :

- $CaCO_3$ : 5,00g
- $LaPO_4$ : 4,68 ± 0,01g
- $Ca_2P_2O_7$ : 2,54g
- $SiO_2$ : 1,20g
- $CaF_2$: 0,86g.

Comme dans l'exemple 1, on utilise un excès de 10% environ de $CaF_2$ par rapport à la quantité stoechiométrique. En réalisant le mélange des produits de départ, et le traitement thermique et la calcination dans les mêmes conditions que celles de l'exemple 1, on obtient 12g d'apatite au lanthane.

II. Préparation d'apatites à partir de phoshates de lanthanides et/ou d'actinides et de silicate de calcium.

L'utilisation de silicate de calcium $CaSiO_3$ peut présenter un grand intérêt car il est issu en grande quantité de l'industrie cimentière et il existe aussi dans la nature sous le nom de wollastonite $Ca_3(SiO_3)_3$. L'utilisation de silicate de calcium comme source de calcium est donc intéressante puisqu'il s'agit d'un produit naturel, ce qui fera baisser le prix de revient de l'apatite finale. On peut donc remplacer partiellement ou totalement dans chaque préparation le carbonate de calcium et la silice par le silicate de calcium.

Ainsi, pour obtenir une apatite silicatée de formule :

$$Ca_8La_2(PO_4)_4(SiO_4)_2F_2$$

on peut utiliser les produits de départ suivants :

- 3 mol de $CaCO_3$,
- 2 mol de $LaPO_4$,
- 2 mol de $CaSiO_3$,
- 1 mol de $CaF_2$, et
- 1 mol de $Ca_2P_2O_7$.

L'exemple 5 illustre la préparation de ce produit.

**Exemple 5** : Préparation de l'apatite $Ca_8La_2(PO_4)_4(SiO_4)_2F_2$.

Pour cette préparation, on utilise les produits suivants :

- $LaPO_4$ : 4,68 ± 0,01g
- $CaCO_3$ : 3,00 ± 0,01g
- $CaSiO_3$ : 2,32 ± 0,01g
- $CaF_2$: 0,,86 ± 0,01g
- $Ca_2P_2O_7$ : 2,54 ± 0,01g.

La quantité de $CaF_2$ représente un excès de 10% par rapport aux quantités stoechiométriques.

Pour préparer cette apatite, on suit le même mode opératoire que dans l'exemple 1 en réalisant le mélange, l'élimination du $CO_2$ et la calcination dans les mêmes conditions.

On obtient ainsi 12g de l'apatite silicatée au lanthane ayant la formule donnée ci-dessus.

III. Préparation d'apatite phosphosilicatée contenant des lanthanides et/ou des actinides et du sodium.

Pour introduire du sodium dans l'apatite, on ajoute au mélange du métasilicate de sodium $Na_2SiO_3$ en quantité contrôlée qui joue également le rôle de fondant.

Cette addition de sodium est intéressante car elle permet d'augmenter les quantités de terres rares et actinidesdans le matériau en favorisant la substitution:

- $2Ca^{2+} \rightarrow Na^+ + Ln^{3+}$.
- $2Ca^{2+} \rightarrow Na^+ + A^{3+}$

Par ailleurs, le fait que le métasilicate de sodium joue le rôle de fondant conduit à réaliser un frittage réactif, ce qui est plus intéressant.

L'apport de métasilicate de sodium est calculé de façon à correspondre à l'équilibre des charges et à permettre une fabrication pratique de l'apatite.

L'exemple suivant illustre la préparation d'une apatite de ce type.

**Exemple 6 :** Préparation de l'apatite de formule $Ca_4NaLa_5(PO_4)_2(SiO_4)_4F_2$.

Pour cette préparation, on part des produits suivants :

- 2,5 mol de $La_2O_3$,
- 3,5 mol de $SiO_2$,
- 0,5 mol de $Na_2SiO_3$,
- 1 mol de $CaCO_3$,
- 1 mol de $CaF_2$, et
- 1 mol de $Ca_2P_2O_7$.

Comme précédemment, on utilise une quantité de $CaF_2$ en excès de 10% par rapport à la quantité stoechiométrique pour compenser la volatilisation lors de la calcination. On opère comme dans l'exemple 1 en préparant un mélange de poudres, en le portant à $900 \pm 10°C$, pendant 1h, pour éliminer le $CO_2$, en réalisant la calcination dans un four à pression atmosphérique à une température de $1350 \pm 10°C$ pendant 2h, et en effectuant plusieurs cycles de calcination-broyage.

Pour réaliser cette préparation, on pourrait utiliser également les quantités suivantes de produits:

- $LaPO_4$ : 2 mol
- $SiO_2$ : 3,5 mol
- $Na_2SiO_3$ : 0,5 mol
- $La_2O_3$: 1,5 mol
- $CaCO_3$ : 3 mol, et
- $CaF_2$: 1 mol.

ou encore utiliser du silicate de calcium au lieu de $CaCO_3$, c'est-à-dire partir des produits suivants :

- $LaPO_4$ : 2 mol
- $SiO_2$ : 0,5 mol
- $Na_2SiO_3$ : 0,5 mol
- $La_2O_3$: 1,5 mol
- $CaSiO_3$ : 3 mol, et
- $CaF_2$: 1 mol.

Dans ce dernier cas, il n'est pas nécessaire d'effectuer le traitement thermique à $900 \pm 10°C$ pour décomposer $CaCO_3$ et éliminer $CO_2$.

Les apatites phosphosilicatées conformes à l'invention peuvent être utilisées sous forme pulvérulente, sous forme de granules ou sous forme de céramiques denses.

La forme pulvérulente est obtenue directement par calcination. Les granules peuvent être préparés par des procédés classiques à partir de la poudre calcinée que l'on mélange avec un liquide ou une solution de liant et d'autres additifs, des techniques de granulation sont par exemple décrites dans Introduction to the Principles of Ceramic Processing - James S.Reed, John Wiley & Sons - Copyright 1988, p. 313 à 325.

Pour préparer le produit sous la forme de céramiques denses, on soumet à un frittage une poudre du produit ou les granules obtenus précédemment. Ce frittage peut en particulier être effectué par compression à chaud.

Les apatites phosphosilicatées peuvent être utilisées comme matériau de confinement des déchets radioactifs de diverses façons comme on peut le voir ci-après sur les figures 1 à 5.

Sur la figure 1, on a représenté un bloc obtenu conformément à l'invention.

Ce bloc comprend des déchets radioactifs 1 qui ont été enrobés dans une matrice 3 à base d'apatite phosphosilicatée. Les déchets radioactifs peuvent être constitués par des déchets de haute activité, en particulier à vie longue, tels que les déchets provenant de l'évaporation des effluents de haute activité.

Le bloc peut être préparé par un procédé consistant à déposer dans le fond d'un conteneur une couche de poudre ou de granules d'apatite, à inclure ensuite le déchet radioactif et à terminer le remplissage du conteneur avec de la poudre ou des granules d'apatite, et à soumettre ensuite éventuellement l'ensemble à une compression isostatique à chaud.

Sur la figure 2, on a représenté un autre mode d'utilisation de l'apatite de l'invention.

Dans ce cas, les éléments radioactifs lanthanides et/ou actinides 21 sont inclus directement dans la structure chimique de l'apatite phosphosilicatée 23 de formule (I) et ils se trouvent ainsi en solution solide dans le matériau lui-même, c'est-à-dire dans l'apatite phosphosilicatée.

Sur la figure 3, on a représenté un autre mode d'introduction des éléments radioactifs dans la matrice de confinement. Dans ce cas, les éléments radioactifs 31 sont incorporés sous la forme de microinclusions dans les cristaux d'apatite phosphosilicatée 33. Ceci peut être obtenu en disposant le déchet radioactif dans la matrice et en recristallisant l'ensemble à une pression de 2000 à 4000MPa (20 à 40Kbar) et à une température de 1000 à 1100°C, ou simplement à une température de 1100 à 1500°C.

Sur la figure 4, on a représenté un bloc de conditionnement de déchets radioactifs obtenu en mettant tout d'abord le déchet radioactif sous la forme d'un bloc 41 du type de ceux des figures 2 et 3, c'est-à-dire soit en incluant les éléments radioactifs dans la structure chimique de l'apatite phosphosilicatée, soit en les incorporant sous la forme de microinclusions dans les cristaux d'apatite phosphosilicatée, et en entourant ensuite le bloc par une couche externe 43 d'apatite phosphosilicatée non chargée en éléments radioactifs.

Sur la figure 5, on a représenté un autre type de conditionnement dans lequel on inclut tout d'abord le déchet radioactif dans une matrice de confinement 53 constituée par une apatite phosphosilicatée, le déchet pouvant être incorporé tel quel , par exemple 51a, ou être déjà fixé dans la structure cristalline d'une apatite phosphosilicatée 51b. On dispose ensuite autour du déchet enrobé dans la matrice 53 plusieurs couches 55, 57 et 59 d'apatite de compositions différentes dont certaines peuvent être des compositions de fluorapatite naturelle $Ca_{10}(PO_4)_6F_2$. Dans ce cas, la couche la plus interne 55 peut avoir une composition choisie de façon à résister aux dégâts d'irradiation, tandis que les couches externes 59 sont choisies pour résister aux agressions du milieu extérieur. Par ailleurs, on peut choisir ces différentes couches de façon à obtenir un système ayant de meilleures propriétés mécaniques que celles des blocs obtenus dans le cas des figures 1 à 4.

Tableau 1

| Produit $Ca_{10-y}Ln_y(PO_4)_{6-y}$ | y | a ($CaCO_3$) | b ($Ln_2O_3$) | c ($Ca_2P_2O_7$) | d ($SiO_2$) | e ($CaF_2$) | f ($LnPO_4$) |
|---|---|---|---|---|---|---|---|
| $Ca_9Ln(PO_4)_5SiO_4F_2$ | 1 | 4 | 0 | 2 | 1 | 1 | 1 |
| $Ca_8Ln_2(PO_4)(SiO_4)_2F_2$ | 2 | 3 | 1 | 2 | 2 | 1 | 0 |
| $Ca_8Ln_2(PO_4)_4(SiO_4)_2F_2$ | 2 | 5 | 0 | 1 | 2 | 1 | 2 |
| $Ca_6Ln_4(PO_4)_2(SiO_4)F_2$ | 4 | 3 | 2 | 1 | 4 | 1 | 0 |
| $Ca_6Ln_4(PO_4)_2(SiO_4)_4F_2$ | 4 | 5 | 1 | 0 | 4 | 1 | 2 |
| $Ca_5Ln_5(PO_4)(SiO_4)_5F_2$ | 5 | 4 | 2 | 0 | 5 | 1 | 1 |
| $Ca_4Ln_6(SiO_4)_6F_2$ | 6 | 3 | 3 | 0 | 6 | 1 | 0 |

Tableau 2

| Ex | Produit préparé | y | $CaCO_3$ (g) | $La_2O_3$ (g) | $Ca_2P_2O_7$ (g) | $SiO_2$ (g) | $CaF_2$ (g) | Prod (g) |
|---|---|---|---|---|---|---|---|---|
| 1 | $Ca_8La_2(PO_4)_4(SiO_4)_2F_2$ | 2 | 3,00 | 3,26 | 5,08 | 1,20 | 0,86 | 12,04 |

Tableau 2   (suite)

| Ex | Produit préparé | y | CaCO$_3$ (g) | La$_2$O$_3$ (g) | Ca$_2$P$_2$O$_7$ (g) | SiO$_2$ (g) | CaF$_2$ (g) | Prod (g) |
|---|---|---|---|---|---|---|---|---|
| 2 | Ca$_6$La$_4$(PO$_4$)$_2$(SiO$_4$)$_4$F$_2$ | 4 | 3,00 | 6,52 | 2,54 | 2,40 | 0,86 | 13,96 |
| 3 | Ca$_4$La$_6$(SiO$_4$)$_6$F$_2$ | 6 | 3,00 | 9,78 | 0 | 3,60 | 0,86 | 15,88 |

**Revendications**

1.  Procédé de conditionnement de déchets radioactifs, caractérisé en ce qu'il consiste à incorporer ces déchets dans une matrice de confinement à base d'apatite phosphosilicatée répondant à la formule :

$$M_t Ca_x Ln_y A_z (PO_4)_u (SiO_4)_{6-u} X \qquad (I)$$

dans laquelle

-   M est au moins un cation de métal alcalin,
-   Ln représente au moins un cation choisi parmi l'yttrium et les lanthanides,
-   A représente au moins un cation choisi parmi les actinides,
-   X représente S$^{2-}$, 2F$^-$, 2Cl$^-$, 2OH$^-$, 2Br$^-$ ou 2I$^-$, et
-   t , u, x, y et z sont tels que

$$0 \leq t \leq 3$$

$$0 < u < 6$$

$$0 < x < 10$$

$$0 \leq y \leq 10$$

$$0 \leq z \leq 7$$

$$y+z>0,$$

et que le nombre total de charges positives apportées par les cations M, Ca, Ln et A soit égal à (26 - u).

2.  Procédé selon la revendication 1, caractérisé en ce que l'on enrobe le déchet radioactif dans la matrice d'apatite phosphosilicatée.

3.  Procédé selon la revendication 1, caractérisé en ce que le déchet radioactif à conditionner est constitué de lanthanides et/ou d'actinides et en ce que l'on incorpore les lanthanides et/ou les actinides dans l'apatite phosphosilicatée de formule :

$$M_t Ca_x Ln_y A_z (PO_4)_u (SiO_4)_{6-u} X \qquad (I)$$

dans laquelle au moins une partie de Ln et A sont les lanthanides et les actinides à conditionner, et M, x, y, t et u ont les significations données dans la revendication 1.

**4.** Procédé selon la revendication 1, caractérisé en ce que le déchet radioactif à conditionner étant constitué de lanthanides et/ou d'actinides, on incorpore ces lanthanides et/ou ces actinides sous la forme de microinclusions dans des cristaux d'apatite phosphosilicatée.

**5.** Procédé selon la revendication 2, caractérisé en ce que le déchet radioactif est constitué par une apatite phosphosilicatée de formule :

$$M_tCa_xLn_yA_z(PO_4)_u(SiO_4)_{6-u}X \tag{I}$$

dans laquelle M, Ln, A, t, x, y et u ont les significations données dans la revendication 1, au moins une partie de Ln et de A étant constituée par des lanthanides et/ou des actinides radioactifs.

**6.** Procédé selon l'une quelconque des revendications 1 à 5, caractérisé en ce que la matrice de confinement comprend une couche d'apatite phosphosilicatée et au moins une autre couche d'apatite phosphosilicatée ou non de composition différente disposées autour des déchets radioactifs.

**7.** Procédé selon l'une quelconque des revendications 1 à 6, caractérisé en ce que l'apatite phosphosilicatée répond à la formule :

$$Ca_{10-y}Ln_y(PO_4)_{6-y}(SiO_4)_yF_2$$

dans laquelle y est tel que

$$0 < y < 6.$$

**8.** Bloc de conditionnement d'un déchet radioactif, caractérisé en ce qu'il comprend une matrice d'apatite phosphosilicatée contenant des éléments radioactifs choisis parmi les actinides et/ou les lanthanides, les actinides et/ou les lanthanides entrant dans la structure chimique de l'apatite phosphosilicatée, et cette apatite répondant à la formule :

$$M_tCa_xLn_yA_z(PO_4)_u(SiO_4)_{6-u}X \tag{(I)}$$

dans laquelle

- M est au moins un cation de métal alcalin,
- Ln représente au moins un cation choisi parmi l'yttrium et les lanthanides,
- A représente au moins un cation choisi parmi les actinides,
- X représente $S^{2-}$, $2F^-$, $2Cl^-$, $2OH^-$, $2Br^-$ ou $2I^-$, et
- t , u, x, y et z sont tels que

$$0 \leq t \leq 3$$

$$0 < u < 6$$

$$0 < x < 10$$

$$0 \leq y \leq 10$$

$$0 \leq z \leq 7,$$

$$y + z > 0$$

et que le nombre total de charges positives apportées par les cations M, Ca, Ln et A soit égal à (26 - u).

9. Bloc selon la revendication 8, caractérisé en ce que l'apatite phosphosilicatée répond à la formule :

$$Ca_{10-y} \, Ln_y (PO_4)_{6-y} \, (SiO_4)_y \, F_2 \qquad\qquad (II)$$

dans laquelle y est tel que

$$0 < y < 6.$$

10. Procédé de préparation d'apatite phosphosilicatée de formule :

$$M_t Ca_x Ln_y A_z (PO_4)_u (SiO_4)_{6-u} X \qquad\qquad (I)$$

dans laquelle

- M est au moins un cation de métal alcalin,
- Ln représente au moins un cation choisi parmi l'yttrium et les lanthanides,
- A représente au moins un cation choisi parmi les actinides,
- X représente 2F⁻, et
- t , u, x, y et z sont tels que

$$0 \leq t \leq 3$$

$$0 < u < 6$$

$$0 < x < 10$$

$$0 \leq y \leq 10$$

$$0 \leq z \leq 7,$$

et

$$y + z > 0.$$

et que le nombre total de charges positives apportées par les cations M, Ca, Ln et A soit égal à (26 - u), caractérisé en ce qu'il comprend les étapes suivantes :

a) préparer un mélange de poudres comprenant

- au moins un phosphate choisi parmi le pyrophosphate de calcium, les phosphates de lanthanides et les phosphates d'actinides,
- du fluorure de calcium,
- du carbonate de calcium,
- au moins un composé choisi parmi $SiO_2$, $CaSiO_3$ et $M_2SiO_3$, et
- éventuellement un ou plusieurs oxydes choisis parmi les oxydes de terres rares et les oxydes d'actinides, en proportions telles qu'elles correspondent à l'obtention de l'apatite de formule (I) voulue,

b) traiter thermiquement le mélange pour décomposer le carbonate de calcium et éliminer le gaz carbonique, et
c) calciner le mélange traité thermiquement à une température de 800 à 1500°C, pendant une durée appropriée pour former l'apatite phosphosilicatée de formule (I).

11. Procédé selon la revendication 10, caractérisé en ce que l'on réalise la calcination en plusieurs étapes en effectuant un rebroyage du produit entre chaque étape.

12. Procédé selon la revendication 10, caractérisé en ce que l'on réalise la calcination à une température de 800 à 1100°C sous une pression de 1000 à 3000MPa.

**Patentansprüche**

1. Verfahren zum Endkonditionieren radioaktiver Abfälle, **dadurch gekennzeichnet,** daß es darin besteht, diese Abfälle einzubetten in eine Sicherheits- bzw. Einschließungsmatrix auf Phosphosilikatsapatit-Basis entsprechend der Formel:

$$M_t Ca_x Ln_y A_z (PO_4)_u (SiO_4)_{6-u} X \tag{I}$$

in der

- M wenigstens ein Alkalimetallkation ist,
- Ln wenigsten ein Kation darstellt, ausgewählt zwischen Yttrium und den Lanthanoiden,
- A wenigstens ein Kation darstellt, ausgewählt unter den Actinoiden,
- X stellvertretend ist für $S^{2-}$, $2F^-$, $2Cl^-$, $2OH^-$, $2Br^-$ oder $2I^-$, und
- t, u, x, y, und z so sind, daß

$$0 \leq t \leq 3$$

$$0 < u < 6$$

$$0 < x < 10$$

$$0 \leq y \leq 10$$

$$0 \leq z \leq 7$$

$$y + z > 0,$$

und daß die Gesamtzahl durch die Kationen M, Ca, Ln und A eingebrachter positiver Ladungen gleich (26 - u) ist.

2. Verfahren nach Anspruch 1, dadurch gekennzeichnet, daß man den radioaktiven Abfall in der Phosphosilikatsapatit-Matrix einkapselt.

3. Verfahren nach Anspruch 1, dadurch gekennzeichnet, daß der zu konditionierende radioaktive Abfall gebildet wird durch Lanthanoide und/oder Actinoide, und dadurch, daß man die Lanthanoide und/oder Actinoide einbettet in den Phosphosilikatsapatit der Formel:

$$M_tCa_xLn_yA_z(PO_4)_u(SiO_4)_{6-u}X \qquad (I)$$

in der wenigstens ein Teil von Ln und A die zu konditionierenden Lanthanoide und Actinoide sind, und M, x, y, t und u die in Anspruch 1 angegebenen Bedeutungen haben.

4. Verfahren nach Anspruch 1, dadurch gekennzeichnet, daß die zu konditionierenden Abfälle durch Lanthanoide und/oder Actinoide gebildet werden, man diese Lanthanoide und/oder Actinoide in Form von Mikroeinschlüssen in Phosphosilikatsapatit-Kristalle einbettet.

5. Verfahren nach Anspruch 2, dadurch gekennzeichnet, daß der radioaktive Abfall gebildet wird durch einen Phosphosilikatsapatit der Formel:

$$M_tCa_xLn_yA_z(PO_4)_u(SiO_4)_{6-u}X \qquad (I)$$

in der M, Ln, A, x, y, t und u die in Anspruch 1 angegebenen Bedeutungen haben, wobei wenigstens ein Teil von Ln und von A durch radioaktive Lanthanoide und/oder Actinoide gebildet wird.

6. Verfahren nach einem der vorangehenden Ansprüche, dadurch gekennzeichnet, daß die Einschließungsmatrix eine Schicht aus Phosphosilikatsapatit und wenigstens eine weitere Schicht aus Phosphosilikatsapatit oder nicht mit unterschiedlicher Zusammensetzung umfaßt, um radioaktive Abfälle herum angeordnet.

7. Verfahren nach einem der Ansprüche 1 bis 6, dadurch gekennzeichnet, daß der Phosphosilikatsapatit folgender Formel entspricht:

$$Ca_{10-y}Ln_y(PO_4)_{6-y}(SiO_4)_yF_2$$

in der y so ist, daß

$$0 < y < 6.$$

8. Block zur Endkonditionierung eines radioaktiven Abfalls, dadurch gekennzeichnet, daß er eine Phosphosilikatsapatit-Matrix umfaßt, die radioaktive Elemente enthält, die ausgewählt werden zwischen den Actinoiden und/oder den Lanthanoiden, wobei die Actinoide und/oder die Lanthanoide sich eingliedern in die chemische Struktur des Phosphosilikatsapatits und dieser Apatit der folgenden Formel entspricht:

$$M_tCa_xLn_yA_z(PO_4)_u(SiO_4)_{6-u}X \qquad (I)$$

in der

- M wenigstens ein Alkalimetallkation ist,
- Ln wenigsten ein Kation darstellt, ausgewählt zwischen Yttrium und den Lanthanoiden,
- A wenigstens ein Kation darstellt; ausgewählt unter den Actinoiden,
- X stellvertretend ist für $S^{2-}$, $2F^-$, $2Cl^-$, $2OH^-$, $2Br^-$ oder $2I^-$, und
- t, u, x, y, und z so sind, daß

$$0 \leq t \leq 3$$

$$0 < u < 6$$

$$0 < x < 10$$

$$0 \leq y \leq 10$$

$$0 \leq z \leq 7$$

$$y + z > 0$$

und daß die Gesamtzahl durch die Kationen M, Ca, Ln und A eingebrachter positiver Ladungen gleich (26 - u) ist.

9. Block nach Anspruch 8, dadurch gekennzeichnet, daß der Phosphosilikatsapatit folgender Formel entspricht:

$$Ca_{10-y}Ln_y(PO_4)_{6-y}(SiO_4)_yF_2 \tag{II}$$

in der y so ist, daß

$$0 < y < 6.$$

10. Herstellungsverfahren eines Phosphosilikatsapatits der Formel:

$$M_tCa_xLn_yA_z(PO_4)_u(SiO_4)_{6-u}X \tag{I}$$

in der

- M wenigstens ein Alkalimetallkation ist
- Ln wenigsten ein Kation darstellt, ausgewählt zwischen Yttrium und den Lanthanoiden,
- A wenigstens ein Kation darstellt, ausgewählt unter den Actinoiden,
- X stellvertretend ist für $2F^-$, und
- t, u, x, y, und z so sind, daß

$$0 \leq t \leq 3$$

$$0 < u < 6$$

$$0 < x < 10$$

$$0 \leq y \leq 10$$

$$0 \leq z \leq 7,$$

und

$$y + z > 0,$$

und daß die Gesamtzahl durch die Kationen M, Ca, Ln und A eingebrachter positiver Ladungen gleich (26 - u) ist, dadurch gekennzeichnet, daß es die folgenden Schritte umfaßt:

a) Zubereiten einer Pulvermischung aus

- wenigstens einem Phosphat, ausgewählt unter dem Calciumpyrophosphat, den Lanthanoidenphosphaten und den Actinoidenphosphaten,
- Calciumfluorid,
- Calciumcarbonat,
- wenigstens einer Verbindung, ausgewählt unter $SiO_2$, $CaSiO_3$ und $M_2SiO_3$, und
- eventuell einem oder mehreren Oxiden, ausgewählt unter den Oxiden der seltenen Erden und den Actinoidenoxiden in solchen Proportionen, daß sie der Herstellung von Apatit der gewünschten Formel (I) entsprechen,

b) Wärmebehandlung der Mischung, um das Calciumcarbonat zu zersetzen und das Kohlendioxid zu eliminieren, und

c) Calzinieren der wärmebehandelten Mischung bei einer Temperatur von 800 bis 1500°C während einer angemessenen Dauer, um das Phosphosilikatsapatit der Formel (I) zu bilden.

11. Verfahren nach Anspruch 10, dadurch gekennzeichnet, daß man das Calzinieren in mehreren Schritten durchführt und dabei das Produkt zwischen den einzelnen Schritten jedesmal wieder mahlt.

12. Verfahren nach Anspruch 10, dadurch gekennzeichnet, daß man das Calzinieren bei einer Temperatur von 800 bis 1100°C unter einem Druck von 1000 bis 3000MPa durchführt

**Claims**

1. Process for the conditioning of radioactive waste, characterized in that it consists of incorporating said waste in a confinement matrix based on phosphosilicated apatite complying with the formula:

$$M_tCa_xLn_yA_z(PO_4)_u(SiO_4)_{6-u}X \qquad\qquad (I)$$

in which

- M is at least one alkali metal cation,
- Ln represents at least one cation chosen from among yttrium and lanthanides,
- A represents at least one cation chosen from among actinides,
- X represents $S^{2-}$, $2F^-$, $2Cl^-$, $2OH^-$, $2Br^-$ or $2I^-$ and
- t, u, x, y and z are such that

$$0 \leq t \leq 3$$

$$0 < u < 6$$

$$0 < x < 10$$

$$0 \leq y \leq 10$$

$$0 \leq z \leq 7$$

$$y + z > 0$$

and that the total number of positive charges supplied by the cations M, Ca, Ln and A is equal to (26-u).

2. Process according to claim 1, characterized in that the radioactive waste is enveloped in the phosphosilicated apatite matrix.

3. Process according to claim 1, characterized in that the radioactive waste to be conditioned is constituted by lanthanides and/or actinides and that the lanthanides and/or actinides are incorporated into the phosphosilicated apatite of formula:

$$M_t Ca_x Ln_y A_z (PO_4)_u (SiO_4)_{6-u} X \qquad (I)$$

in which at least part of the Ln and A are lanthanides and actinides to be conditioned and M, x, y, t and u have the meanings given in claim 1.

4. Process according to claim 1, characterized in that the radioactive waste to be conditioned is constituted by lanthanides and/or actinides, said lanthanides and/or actinides being incorporated in the form of micro-inclusions into the phosphosilicated apatite crystals.

5. Process according to claim 2, characterized in that the radioactive waste is constituted by a phosphosilicated apatite of formula:

$$M_t Ca_x Ln_y A_z (PO_4)_u (SiO_4)_{6-u} X \qquad (I)$$

in which M, Ln, A, t, x, y and u have the meanings given in claim 1, at least part of the Ln and A being constituted by radioactive actinides and/or lanthanides.

6. Process according to any one of the claims 1 to 5, characterized in that the confinement matrix comprises a phosphosilicated apatite layer and at least one other phosphosilicated or non-phosphosilicated apatite layer having a different composition and placed around the radioactive waste.

7. Process according to any one of the claims 1 to 6, characterized in that the phosphosilicated apatite complies with the formula:

$$Ca_{10-y} Ln_y (PO_4)_{6-y} (SiO_4) y F_2$$

in which y is such that $0 < y < 6$.

8. Conditioning block for a radioactive waste, characterized in that it comprises a phosphosilicated apatite matrix containing radioactive elements chosen from among actinides and/or lanthanides, the actinides and/or lanthanides entering in the chemical structure of the phosphosilicated apatite and said apatite complying with the formula:

$$M_t Ca_x Ln_y A_z (PO_4)_u (SiO_4)_{6-u} X \qquad (I)$$

in which

- M is at least one alkali metal cation,
- Ln represents at least one cation chosen from among yttrium and lanthanides,

- A represents at least one cation chosen from among actinides,
- X represents $S^{2-}$, $2F^-$, $2Cl^-$, $2OH^-$, $2Br^-$ or $2I^-$ and
- t, u, x, y and z are such that

$$0 \leq t \leq 3$$

$$0 < u < 6$$

$$0 < x < 10$$

$$0 \leq y \leq 10$$

$$0 \leq z \leq 7$$

$$y + z > 0$$

and that the total number of positive charges supplied by the cations M, Ca, Ln and A is equal to (26-u).

9. Block according to claim 8, characterized in that the phosphosilicated apatite complies with the formula:

$$Ca_{10-y}Ln_y(PO_4)_{6-y}(SiO_4)_y F_2 \qquad \text{(II)}$$

in which y is such that $0 < y < 6$.

10. Process for the preparation of phosphosilicated apatite of formula:

$$M_tCa_xLn_yA_z(PO_4)_u(SiO_4)_{6-u}X \qquad \text{(I)}$$

in which

- M is at least one alkali metal cation,
- Ln represents at least one cation chosen from among yttrium and lanthanides,
- A represents at least one cation chosen from among actinides,
- X represents $2F^-$, and
- t, u, x, y and z are such that

$$0 \leq t \leq 3$$

$$0 < u < 6$$

$$0 < x < 10$$

$$0 \leq y \leq 10$$

17

$$0 \leq z \leq 7$$

$$y + z > 0$$

and that the total number of positive charges supplied by the cations M, Ca, Ln and A is such that (26-u), characterized in that it comprises the following stages:

a) preparing a mixture of powders including at least one phosphate chosen from among calcium pyrophosphate, phosphates of lanthanides and phosphates of actinides,

- calcium fluoride,
- calcium carbonate,
- at least one compound chosen from among $SiO_2$, $CaSiO_3$, and $M_2SiO_3$, and
- optionally one or more oxides chosen from among oxides of rare earths and oxides of actinides, in proportions such that they correspond to the obtaining of a desired apatite of formula (I),

b) thermally treating the mixture in order to decompose the calcium carbonate and eliminate the carbon dioxide gas and

c) calcining the thermally treated mixture at a temperature of 800 to 1500°C for an appropriate time to form the phosphosilicated apatite of formula (I).

11. Process according to claim 10, characterized in that the calcination is carried out in several stages with a recrushing of the product between each stage.

12. Process according to claim 10, characterized in that calcining is carried out at a temperature of 800 to 1100°C under a pressure of 1000 to 3000 mPa.

FIG. 1

FIG. 2

FIG. 3

FIG. 4

FIG. 5